**Europäisches Patentamt**

**European Patent Office**

**Office européen des brevets**

(11) Veröffentlichungsnummer: **0 468 398 A1**

## (12) EUROPÄISCHE PATENTANMELDUNG

(21) Anmeldenummer: **91112233.1**

(22) Anmeldetag: **22.07.91**

(51) Int. Cl.5: **G01L 9/00**

(30) Priorität: **24.07.90 DE 4023420**

(43) Veröffentlichungstag der Anmeldung:
**29.01.92 Patentblatt 92/05**

(84) Benannte Vertragsstaaten:
**AT BE CH DE FR GB LI**

(71) Anmelder: **Pfister Messtechnik GmbH**
**Stätzlinger Strasse 70**
**W-8900 Augsburg(DE)**

(72) Erfinder: **Häfner, Hans Wilhelm**
**Fichtenweg 15**
**W-8890 Aichach-Walchshofen(DE)**

(74) Vertreter: **Kahler, Kurt**
**Patentanwalt Dipl.-Ing. Kurt Kahler**
**Gerberstrasse 3 Postfach 1249**
**W-8948 Mindelheim(DE)**

(54) **Drucksensor und Verfahren zu seiner Herstellung.**

(57) Drucksensor mit einem scheibenförmigen Basisteil (12) mit einer vornehmlich zentralen Öffnung (14), an deren einer Stirnseite ein Druckwandler, vornehmlich in Form einer Dehnungsmeßstreifenvorrichtung (16, 18) angeordnet ist, einem Druckaufnahmeteil (22) mit einer in Abstand von der anderen Stirnseite der Öffnung (14) verlaufenden Membran (26), die einstückig an einem starren Ring (24) ausgebildet ist, welcher vornehmlich die gleichen Umfangsabmessungen besitzt wie das scheibenförmige Basisteil (12) und mit diesem verbunden ist; und einem Abstandshalter (40) zwischen der Membran (26) und dem Druckwandler (16, 18) und der eine Durchbiegung der Membran (26) auf den Druckwandler (16, 18) überträgt. Der erfindungsgemäße Drucksensor läßt sich kostengünstig durch ein vereinfachtes Verfahren herstellen, bei dem die einzelnen Teile aus Keramik geformt, gesintert und zusammengefügt werden.

Fig. 1

EP 0 468 398 A1

Die Erfindung betrifft einen Drucksensor gemäß dem Oberbegriff des Patentanspruchs 1.

Die DE-OS 38 17 695 beschreibt einen keramischen Drucksensor, der aus mehreren Schichten zusammengesetzt ist, wobei an den aneinanderliegenden Grenzflächen durch das Brennen ein Kontakt hergestellt wird. Der bekannte Drucksensor muß in einen exakt gearbeiteten Gehäusekörper eingesetzt werden, über dem ein Deckelement angebracht ist, wobei die beiden Elemente mittels eines Verstemmelementes zusammengehalten werden.

Die Deutsche Patentanmeldung 39 07 202.9 befaßt sich mit einem topfförmigen Drucksensor, in dessen Boden eine verhältnismäßig dünne Membran ausgebildet ist, auf deren Außenseite eine elektrische Brückenschaltung in Form von Dickfilmwiderständen aufgebracht ist. Der keramische Drucksensor besitzt eine ringförmige, starre Einspannstelle und einen flexiblen Übergang zu der in einem starren Bodenring gehaltenen Membran.

Die Deutsche Patentanmeldung 40 03 048.2 beschreibt eine Druckmeßzelle mit einem Topfgehäuse, in dem ein Meßkolben unter Bildung eines Ringspalts eingesetzt ist, der mit elastomerem Material gefüllt ist, das in Kontakt mit einer unter Druck verformbaren, dem Meßkolben gegenüberliegenden Membran steht, deren Außenseite nach Art einer Dehnungsmeßvorrichtung mit einer Brückenschaltung aus Dickfilmwiderständen versehen ist. Wird die Druckaufnahmefläche des Meßkolbens größer ausgebildet als die effektiv wirksame Fläche der Membran, dann ergibt sich eine entsprechende Druckübersetzung mit einem entsprechend erhöhten Druck an der Membran. Es lassen sich deshalb mit dieser Meßzelle auch kleine Drücke sehr genau messen.

Die beiden erstgenannten Sensoren lassen sich zwar verhältnismäßig einfach herstellen; sie verlangen jedoch eine eigene Einspannung, um für Druckmessungen eingesetzt werden zu können.

Die zuletzt genannte Meßzelle bildet zwar ein selbständiges, unabhängiges Element; der Aufbau und die Herstellung sind jedoch aufgrund der Verwendung des elastomeren Materials als Druckübertragungsträger kompliziert.

Der Erfindung liegt deshalb die Aufgabe zugrunde, einen Drucksensor anzugeben, der als eigenständiges Element ausgebildet und kostengünstig herstellbar ist. Ferner soll ein Verfahren zur Herstellung eines derartigen Drucksensors angegeben werden.

Der erfindungsgemäße Drucksensor besitzt die Merkmale des Patentanspruchs 1, das erfindungsgemäße Verfahren zur Herstellung desselben die des Patentanspruchs 7.

Vorteilhafte Ausgestaltungen der Erfindung sind in den übrigen Ansprüchen gekennzeichnet.

Ausführungsbeispiele der Erfindung sind in der Zeichnung dargestellt und werden im folgenden näher beschrieben.

Es zeigen:

Fig. 1 einen Vertikalschnitt durch eine erste Ausführungsform eines erfindungsgemäßen Drucksensors;

Fig. 2 eine Draufsicht auf den inneren zentralen Bereich des Drucksensors nach Fig. 1;

Fig. 3 einen Vertikalschnitt durch eine zweite Ausführungsform eines erfindungsgemäßen Drucksensors;

Fig. 4 eine Draufsicht auf den inneren zentralen Bereich des Drucksensors nach Fig. 3;

Fig. 5 einen Vertikalschnitt durch eine dritte Ausführungsform eines erfindungsgemäßen Drucksensors; und

Fig. 6 eine Draufsicht auf den inneren zentralen Bereich des Drucksensors nach Fig. 5.

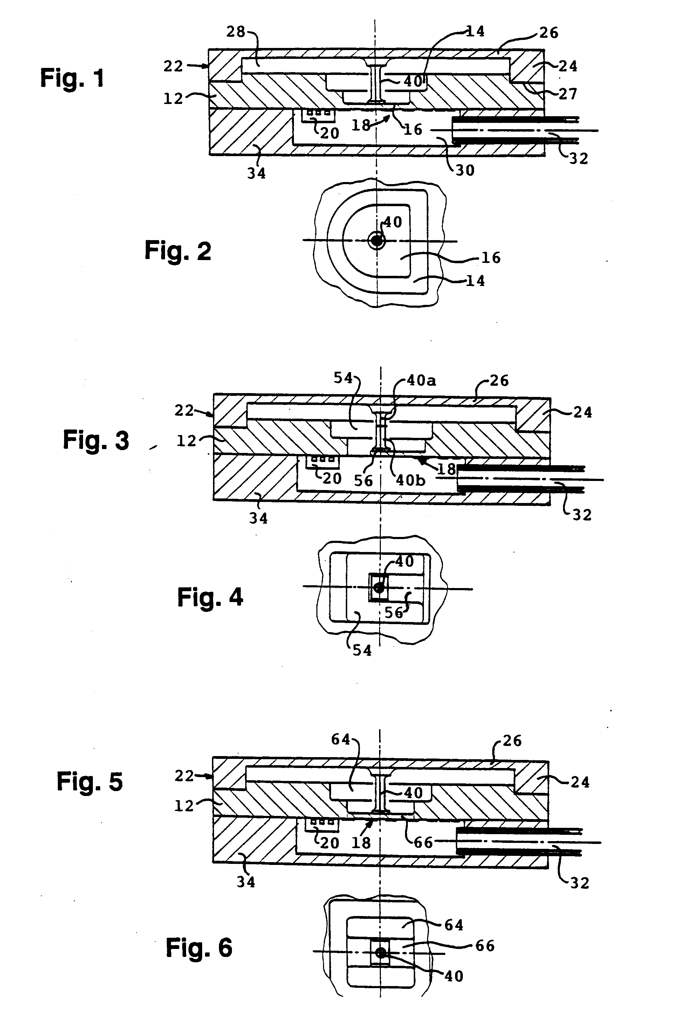

Gemäß Fig. 1 und 2 weist der Drucksensor des ersten Ausführungsbeispiels ein scheibenförmiges Basisteil 12 mit einer gegebenenfalls abgestuften zentralen Öffnung 14 auf, deren engere Stirnseite von einer relativ dünnen Membran 16 überspannt ist. Das Basisteil 12 ist erfindungsgemäß aus Keramik geformt, wobei die Membran 16 dabei einstükkig im Basisteil 12 ausgebildet wird.

Fig. 2 zeigt, welche Form die Öffnung 14 bzw. die Membran 16 beispielsweise haben können. Bei diesem Ausführungsbeispiel wurde eine annähernde Halbkreisform gewählt.

Auf der der Membran 16 abgewandten Seite des Basisteils 12 ist in Abstand davon eine weitere Membran 26 vorgesehen, die einstückig einen Torsionsring 24 überspannt, dessen Außendurchmesser etwa demjenigen des Basisteils 12 entspricht. Das durch den Torsionsring 24 und die Membran 26 gebildete Druckaufnahmeteil 22 ist vorzugsweise ebenfalls aus Keramik hergestellt, wobei vorzugsweise mittig zur Membran 16 ein Abstandshalter, bevorzugt ein Abstandsstift 40 aus Keramik angeformt oder aus Metall oder anderem hitzebeständigen Material bestehend in die Membran 26 eingesetzt sein kann.

Da das Druckaufnahmeteil 22 und das Basisteil 12 aus Keramik sind, können sie nach Zusammenfügen an der ringförmigen Kontaktfläche 27 gemeinsam gesintert werden. Alternativen dazu können die beiden Teile nach getrenntem Sintern miteinander durch Kleben oder dergleichen verbunden werden.

Es ist zu beachten, daß die Membran 26 einen wesentlich größeren Durchmesser besitzt als die Membran 16. Dies bedeutet, daß eine geringe Durchbiegung der Membran 26 bei Druckbeaufschlagung über einen Abstandshalter, insbesondere einen Abstandsstift 40 zwar absolut gesehen die gleiche Versetzung der Membran 16 in Druckrichtung bewirkt, daß aber die Durchbiegung bezogen auf den Durchmesser der Membran 16 wesentlich größer ist als diejenige der Membran 26. Man erhält somit eine praktisch reibungsfreie, entsprechend große und zwar erhebliche Druckübersetzung, so daß auch kleine Drücke genau gemessen werden können. Andererseits kann für hohe Drücke die Membran 16 aufgrund der kleineren Fläche sehr stabil ausgebildet werden.

Für eine Druckmessung ist die Membran 16 in Form einer gedruckten Schaltung auf ihrer Außenseite mit einer bekannten Dehnungsmeßstreifenbrücke 18, bevorzugt in Form von Dickfilmwiderständen versehen. Die Brückenschaltung 18 ist mit einer Erfassungs-/Auswerteschaltung 20 verbunden, die bevorzugt auf der Unterseite des Basisteils 12 aufgebracht ist.

Der die Membran 16 und die Erfassungs-/Auswerteschaltung 20 umfassende Bereich ist als Innenraum 30 einer Abdeckung 34 ausgebildet, die an der Unterseite des Basisteils 12 befestigt ist, wobei ein Rohr 32 den sonst allseitig abgeschlossenen Innenraum 30 mit atmosphärischem Druck, oder falls erwünscht, mit einem bestimmten Unter- oder Überdruck verbindet.

Wie ersichtlich, besitzt der erfindungsgemäße Drucksensor einen äußerst einfachen Aufbau und ist insbesondere sehr kostengünstig herzustellen, wobei sich im einzelnen folgendes Verfahren ergibt:

1. Formen des Basisteils aus Keramikpulver wie $Al_2O_3$;

2. Formen des Druckaufnahmeteils 22 aus Keramikpulver und Anformen oder Einbinden des Abstandsstiftes 40;

3. Zusammenfügen des Basisteils 12 und des Druckaufnahmeteils 22 bevorzugt durch Hochtemperatursintern;

4. Formen des Abdeckteils 34 aus Keramik unter Einbinden des Rohres 32 und nachfolgendem Sintern;

5. Aufbringen der Widerstandsbrücke 18 auf der Membran 16 und der Erfassungs-/Auswerteschaltung 20;

6. Anbringen des Abdeckteils 34 auf der Unterseite des Basisteils 12.

Geeignete Materialien und Brenntemperaturen sind beispielsweise in der DE-A-38 17 695 angegeben.

Besonders vorteilhaft ist gemäß der Erfindung die Kombination der Schritte 5 und 6. Hierbei lassen sich nicht nur die Brückenwiderstände mittels Dickfilmsiebdruck auf die Unterseite des Basiselementes 12 aufbringen, sondern auch die Leiterbahnen können in gleicher Weise dadurch angelegt werden, daß pastöses Lötzinn, etwa eine Mischung von Zinn in verdampfbaren organischen Kunststoff aufgebracht wird, in das dann die Füße der entsprechenden Verstärkerbauteile, Widerstände und integrierten Schaltungen eingesetzt werden. Bevorzugt wird auch die Kontaktfläche des Basisteils 12 zum Abdeckteil 34 mit einer derartigen Zinnpaste versehen. Gemäß einer Alternative zu dem vorstehend angegebenen Einsintern des Rohres 32 kann auch dieses in eine entsprechend vorgeformte Öffnung im Abdeckteil 34 zu diesem Zeitpunkt nach entsprechendem Auftragen von Lötpaste eingesetzt werden.

Zusätzlich oder alternativ kann auch die Kontaktfläche auf dem Abdeckteil 34 zum Basisteil 12 hin entsprechend mit der genannten Lötzinnpaste beschichtet werden oder es erfolgt eine getrennte Verzinnung dieser Kontaktfläche.

Nach Zusammenfügen der Kombination aus Basisteil 12 und Druckaufnahmeteil 22 mit dem Abdeckteil 34 an der Unterseite des Basisteils 12 wird diese Einheit in einen Wärmeofen gebracht und dort auf eine Temperatur erhitzt, bei der das Lötzinn schmilzt und der ggf. darin enthaltene organische Kunststoff verdampft. Da diese Temperatur erheblich niedriger ist als die beim Sintern auftretenden Temperaturen, werden die elektrischen Bauteile auf der Unterseite des Basisteils 12 nicht beeinträchtigt, während durch den Lötvorgang eine elektrisch stabile Verbindung zu diesen Teilen hergestellt wird und an der Kontaktfläche zwischen dem Basisteil 12 und dem Abdeckteil 34 eine feste, dichte Verbindung entsteht.

Alternativ dazu kann der Schritt 6 auch durch entsprechendes Verkleben des Basisteils 12 mit dem Abdeckteil 34 erfolgen, wobei bevorzugt eine entsprechende Kunststoffklebefolie zwischen die Kontaktflächen gelegt wird.

Es sei erwähnt, daß entsprechende Ausgangsleitungen sowie die Stromversorgung für die Erfassungs-/Auswerteschaltung 20 und die Widerstandsbrücke 18 durch das Rohr 32 erfolgen kann.

Aufgrund der erheblich größeren relativen Durchbiegung der Membran 16 (in Bezug auf deren Durchmesser) verglichen mit der relativen Durchbiegung der Membran 26, ergibt sich in der Widerstandsbrücke 18 auch eine erhebliche Widerstandsänderung. Dies bedeutet, daß auch geringe Drücke auf die Membran 26 noch genau von der Widerstandsbrücke 18 erfaßt werden können.

Die Figuren 3 und 4 zeigen in ähnlicher Darstellung wie die Figuren 1 und 2 ein zweites Ausführungsbeispiel der Erfindung, das sich gegenüber dem ersten Ausführungsbeispiel durch die andere Ausbildung der inneren Membran und der Öffnung unterscheidet.

Wie insbesondere aus Fig. 4 ersichtlich, ist bei dieser Ausführungsform die Öffnung 14 des ersten Ausführungsbeispiels durch eine rechteckige Öffnung 54 ersetzt. Wichtig ist jedoch der Ersatz der Membran 16 (Fig. 1 u. 2) durch eine einseitig befestigte Zunge 56, an deren freien Ende wiederum der Abstandsstift 40 anliegt, der auch zweiteilig sein kann, wobei ein oberer Teil 40a an der Innenseite der Membran 26 und ein unterer Teil 40b auf der Oberseite der Zunge 56 ausgebildet ist.

Die Unterseite der Zunge 56 bzw. vorteilhaft der Übergang derselben in das Basisteil 12 ist mit der Widerstandsbrücke 18 versehen. Gerade dieser Übergang spricht besonders empfindlich auf die dort maximale Biegung an.

In ähnlicher Weise zeigen die Figuren 5 und 6 das dritte Ausführungsbeispiel der Erfindung, bei dem anstelle der Membran 16 des ersten Ausführungsbeispiels ein eine quadratische Öffnung 64 überspannender schmaler Streifen 66 verwendet wird, auf dem wiederum der Abstandsstift 40 anliegt. Die untere Seite des Streifens 66 trägt die Widerstandsbrücke 18.

Bei dem vorstehend beschriebenen bevorzugten Ausführungsbeispiel wurde als Druckwandler eine Dehnungsmeßstreifenbrücke verwendet. Die Erfindung ist jedoch hierauf nicht beschränkt. Es können mit entsprechender Anpassung auch beliebige andere Druckwandler verwendet werden. Als Beispiel dafür sei ein kapazitiver Druckwandler genannt, bei dem auf der Außenseite der Membran 16 entsprechende Flächenelektroden anzuordnen wären, die dann entsprechenden Gegenelektroden auf einer in geringem Abstand zur Membran 16 anzuordnenden Platte angebracht sind.

Es sei darauf hingewiesen, daß sich beim ersten Ausführungsbeispiel gemäß Fig. 1 und 2 im Raum 28 ein Gaspolster bildet, während bei den übrigen Beispielen die Räume 28 und 30 verbunden sind und unter dem Druck am Ausgang des Rohres 32 stehen.

Ein derartig hermetisch abgedichteter Drucksensor kann an dem Rohr 32 in einen Tank abgesenkt werden und erfaßt den statischen Druck der darin enthaltenen Flüssigkeit. Aufgrund der hohen Übersetzung sind noch Druckdifferenzen von tausendstel bar meßbar. Es kann somit eine laufende Verbrauchsmessung durchgeführt und auf einem entsprechenden Anzeigegerät oder an entfernter Stelle ausgegeben werden. Da der Drucksensor von dem Rohr 32 gehalten wird, ist eine eigene Befestigung im Tank nicht erforderlich, auch schützt das Rohr 32 die von der Erfassungs-/ Ausweteschaltung 20 herausgeführte Ausgangsleitung, und der Drucksensor ist auf verschiedene Tanktiefen einstellbar.

Aus dem Vorstehenden ergibt sich, daß die erfindungsgemäße Ausbildung zu einem Drucksensor führt, der auch auf sehr niedrige Drücke anspricht. Der erfindungsgemäße Drucksensor ist deshalb für viele Verwendungszwecke geeignet, insbesondere zur Druckmessung und damit Massenbestimmung in Flüssigkeitstanks, wobei als besonderes Beispiel die Treibstofftanks von Kraftfahrzeugen zu nennen sind. Selbstverständlich ist der erfindungsgemäße Drucksensor auch zur Messung von Vertikalkräften einsetzbar, die auf die Membran 26 ausgeübt werden, wenn der Drucksensor entsprechend in seiner Lage fixiert ist.

## Patentansprüche

1. Drucksensor mit Druckübersetzung, gekennzeichnet durch

   a) ein scheibenförmiges Basisteil (12) mit einer vornehmlich zentralen Öffnung (14; 54; 64), an deren einer Stirnseite ein einstückig an dem Basisteil (12) vorzugsweise als Membran (16) ausgebildeter flächiger Druckwandler (16, 18; 56; 66) mit einer ersten wirksamen Druckfläche angeordnet ist;

   b) ein Druckaufnahmeteil (22) mit einer in Abstand von der anderen Stirnseite der Öffnung (14) verlaufenden Membran (26), die einstückig an einem starren Ring (24) ausgebildet ist, welcher etwa die gleichen Umfangsabmessungen besitzt wie das scheibenförmige Basisteil (12) und mit diesem verbunden ist, wobei die effektiv wirksame Fläche der Membran (26) größer, bevorzugt wesentlich größer als diejenige des Druckwandlers (16, 18; 56; 66) ist; und

   c) einen Abstandshalter (40) zwischen der Membran (26) und dem Druckwandler (16, 18; 56; 66), der eine Durchbiegung der Membran (26) auf den Druckwandler (16, 18; 56; 66) überträgt, und wobei das Basisteil (12), das Druckaufnahmeteil (22) und/oder das Abdeckteil (34) aus Keramik hergestellt sind.

2. Drucksensor nach Anspruch 1, gekennzeichnet durch ein Abdeckteil (34), das einen Innenraum (30) zumindest über dem Druckwandler (16, 18; 56; 66) bildend mit der der Membran (26) gegenüberliegenden Stirnseite des Basisteils (12) verbunden ist, wobei vorzugsweise der durch das Abdeckteil (34) gebildete Innenraum (30) über ein Rohr (32) mit einem Druck (Überdruck oder Vakuum) beaufschlagbar ist oder mit atmosphärischem Druck in Verbindung steht.

3. Drucksensor nach Anspruch 2, dadurch gekennzeichnet, daß der Innenraum (30) auch eine Erfassungs-/Auswerteschaltung (20) umschließt, die auf der äußeren Stirnseite des Basisteils (12) in einer gedruckten Schaltung mit dem Druckwandler (16, 18; 56; 66) angeordnet ist.

4. Drucksensor nach einem der vorhergehenden Ansprüche, dadurch gekennzeichnet, daß der Abstandshalter (40) stiftförmig ausgebildet und entweder an der Innenseite der Membran (26) oder der Oberseite des Druckwandlers (16, 18; 56; 66) angeformt bzw. darin eingesetzt ist oder aus zwei Teilen (40a, 40b) besteht, von denen der eine (40a) an der Innenseite der Membran (26) und der andere auf der Oberseite des Druckwandlers (16, 18; 56; 66) angeordnet ist.

5. Drucksensor nach einem der Ansprüche 1 bis 4, dadurch gekennzeichnet, daß der Druckwandler eine Zunge (56) aufweist, an deren freiem Ende der Abstandshalter (40) angesetzt ist oder einen sich über die eine Stirnseite der Öffnung (14) erstreckenden, die Öffnung nicht abdeckenden Streifen (66) aufweist, auf dem vornehmlich mittig der Abstandshalter (40) angesetzt ist.

6. Drucksensor nach einem der vorhergehenden Ansprüche, dadurch gekennzeichnet, daß der Druckwandler eine Dehnungsmeßstreifenvorrichtung (16, 18; 56; 66) in Form einer aus Dickfilmwiderständen aufgetragenen Widerstandsmeßbrücke aufweist, die vorzugsweise am Übergang zwischen Membran (16), Zunge (56) bzw. Streifen (66) und dem starren Teil des Basisteiles (12) angeordnet ist.

7. Verfahren zur Herstellung eines Drucksensors, gekennzeichnet durch
   a) Formen eines scheibenförmigen Basisteils mit einer vornehmlich zentralen Öffnung, deren eine Stirnseite durch einen flächiges Teil zumindest teilweise überdeckt wird, aus nicht kriechendem Material, vornehmlich Keramik;
   b) Formen eines Druckaufnahmeteils aus einem starren Ring und einer dessen eine Stirnseite überdeckenden Membran aus nicht kriechendem Material, vornehmlich Keramik;
   c) Ausbilden eines Abstandshalters zwischen der Membran des Druckaufnahmeteils und des flächigen Teils des Basisteils;
   d) Sintern des Basisteils und des Druckaufnahmeteils getrennt unter nachträglichem Zusammenfügen bzw. gemeinsam nach Zusammensetzen; und
   e) Anbringen eines Druckwandlers auf dem flächigen Teil des Basiselements.

8. Verfahren nach Anspruch 7, gekennzeichnet durch die Schritte
   f) Formen eines Abdeckteils aus nicht kriechendem Material, vornehmlich Keramik unter Bildung eines Innenraums; und
   g) Anbringen des Abdeckteils auf der Unterseite des Basisteils.

9. Verfahren nach Anspruch 8, dadurch gekennzeichnet, daß im Schritt f) in das Abdeckteil das Ende eines Rohres eingebettet wird.

10. Verfahren nach einem der Ansprüche 7 bis 9, dadurch gekennzeichnet, daß im Schritt (e) mittels eines Beschichtungsverfahrens elektrische Leiterbahnen aus niedrig schmelzendem Material auf den flächigen Teil des Basiselementes aufgebracht und elektrische Auswerteelemente mit ihren Anschlüssen in das Material eingesetzt werden und daß dann Schritt (g) ausgeführt wird, wobei die Kontaktflächen zwischen dem Abdeckteil und dem Basisteil mit niedrig schmelzendem Haftmaterial versehen und die ganze Einheit einer Wärmebehandlung mit einer Temperatur unterzogen wird, die die elektrischen Bauelemente nicht beeinträchtigt, jedoch ein Schmelzen des niedrig schmelzenden Materials bewirkt, insbesondere mit einer Temperatur unter 250°, bevorzugt unter 150°, wobei als niedrig schmelzendes Material vorzugsweise eine Lötpaste verwendet wird, die vorzugsweise eine Mischung aus Zinn und verdampfbarem organischen Kunststoff enthält, oder die Verbindung zwischen Abdeckteil und Basisteil durch Verkleben, etwa unter Einlegen einer Kunststoffolie erfolgt, die unter Temperatur oder Druck festhaftend schmilzt.

**Fig. 1**

**Fig. 2**

**Fig. 3**

**Fig. 4**

**Fig. 5**

**Fig. 6**

6

# EUROPÄISCHER RECHERCHENBERICHT

## EINSCHLÄGIGE DOKUMENTE

EP 91112233.1

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | GB - A - 1 478 315 (EMI) <br> * Fig. 1,2; Seite 1, Zeilen 34-86 * | 1,4-6 | G 01 L 9/00 |
| Y | -- | 2,3 | |
| Y | WO - A1 - 89/08 244 (FOXBORO) <br> * Fig. 2; Seite 8, Zeilen 6-8 * <br> -- | 2 | |
| Y | EP - A1 - 0 015 836 (THOMSON-CSF) <br> * Fig. 5; Seite 5, Zeilen 23-25 * <br> -- | 3 | |
| D,A | DE - A1 - 3 817 695 (NGK) <br> * Patentansprüche * <br> -- | 1,7 | |
| A | DE - A1 - 3 901 492 (ENDRESS) <br> * Spalte 1, Zeilen 17-21 * <br> -- | 1 | RECHERCHIERTE SACHGEBIETE (Int. Cl⁵) |
| X | "DER ELEKTRONIKER", Nr. 12, Dezember 1982, Stuttgart H. PIROT " Dünnfilm-Druckssensoren - eine neue Technik" Seiten EL32, EL33 <br> * Seite EL32, Bild 1 * <br> ---- | 1,2,4, 6 | G 01 L 9/00 |

Der vorliegende Recherchenbericht wurde für alle Patentansprüche erstellt.

| Recherchenort | Abschlußdatum der Recherche | Prüfer |
|---|---|---|
| WIEN | 23-09-1991 | BURGHARDT |

EPA Form 1503 03 82